# EUROPEAN PATENT SPECIFICATION

(11) **EP 3 106 722 B1**
(45) Date of publication and mention of the grant of the patent: **12.08.2020**
(21) Application number: 16172636.9
(22) Date of filing: 02.06.2016
(51) Int. Cl.: F16K 17/00

(54) **IMPROVED PRESSURE REGULATOR**
VERBESSERTER DRUCKREGLER
RÉGULATEUR DE PRESSION AMÉLIORÉ

(30) Priority: 15.06.2015 GB 201510404
(43) Date of publication of application: 21.12.2016
(73) Proprietor: Delphi Technologies IP Limited, St. Michael (BB)
(72) Inventor: MACLANE, Stephen, Gillingham, Kent ME8 0RU (GB); DELMAESTRO, Ben, Gillingham, Kent ME8 0RU (GB); WOOD, Christopher, Gillingham, Kent ME8 0RU (GB)
(74) Representative: Delphi France SAS

(56) References cited:
- EP-A1- 0 083 403
- CN-Y- 201 137 732
- US-A1- 2013 160 872

## Description

### Field of the Invention

This disclosure relates to pressure regulators. It has particular but not exclusive application to pressure regulators for Diesel pumps.

### Background to the Invention

Pressure regulators are often used to maintain a more constant pressure of fluid within a vessel or conduit; in other words in order to smooth out fluctuations in pressure. For use within a Diesel pump, such regulators often make use of what is described as a bypass orifice. This is usually located in a regulator piston and is used primarily to maintain a flow through the regulator when the regulator is closed. This is intended to maintain a fluid flow to ensure pump durability.

One of the limitations of this design is at low temperatures, a different sized orifice is needed in order to maintain a sufficient flow at a different fluid viscosity in order to keep an optimum operating window for the regulator, for its pressure regulating requirements. Alternatively, it is known to have adjustable orifice which requires manual adjustment to vary the size e.g. via screw means. European Patent Application 0083403 describes a hydraulic piston valve and Chinese Patent Application CN 201137732Y describes a fluid pressure regulation device.

It is an object of the invention to provide a pressure regulator which provides a more optimised performance irrespective of fluid temperature, and without the need for manual adjustment.

### Statement of the Invention

In one aspect is provided a fluid pressure regulation device including at least one flow path through which fluid is adapted to flow, wherein said flow path includes a throttle plug located therein, and wherein said throttle plug is formed of substantially thermally expandable material having a thermal expansion coefficient of more than 50 x 10-6 m/m/K.

The fluid pressure regulation device includes a housing defining a fluid chamber, and a piston located within said chamber and dividing said chamber into first and second regions, said first region being generally enclosed and bounded by said housing and piston, and wherein said piston is adapted to move within said chamber as a result of pressure difference in the first and second regions, and including either a first fluid flow path through said piston allowing flow of fluid between said first and second regions, and/or a damping orifice located in said housing to provide a second flow path from said first region, wherein said throttle plug(s) is located within said first and/or second flow paths.

The first flow path may be formed as a bore though said piston forming a by-pass orifice.

The throttle plug may be an annular, disc or washer shaped element.

The throttle plug may includes an orifice.

The periphery of the throttle plug(s) may form a seal with said bore and/or damping orifice.

The piston may be urged in one direction by spring means.

The throttle plug(s) may be formed as an insert within said piston bore or damping orifice.

The throttle plugs may be formed integral with said piston.

The throttle plug(s) is formed of rubber or a rubber-like material.

The pressure regulation device may be part of a non-regulated pump.

The throttle plug may be formed of a material having a thermal expansion coefficient of more than 100 x 10-6 m/m/K.

### Brief Description of Drawing

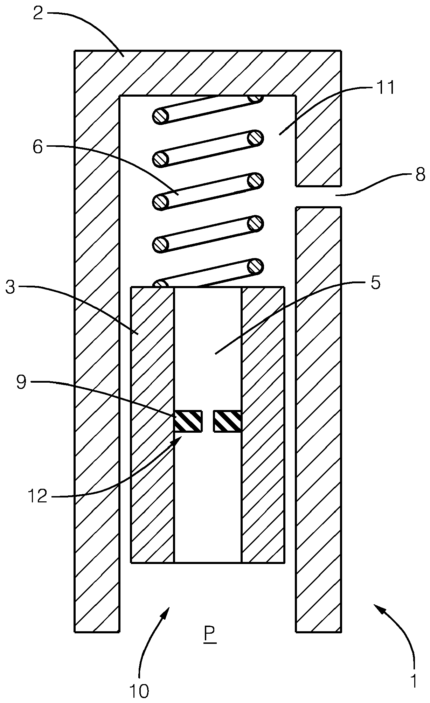

Figure 1 shows a cross section through a portion of a pressure regulator according to one example of the invention.

### Detailed Description of the Invention

Figure 1 shows a cross sectional portion of a typical pressure regulator 1 showing the main body 2 forming a generally enclosed space or chamber. Located within this is a piston 3 which acts against a spring 6. The piston divides the chamber into a first region 10 and a second region 11, the second region generally enclosed and bounded by the piston and the body. Variation in the pressure P at the point shown can be smoothed by allowing the piston to move up due to pressure on the bottom face 4 of the piston. Additionally fluid can pass through a bore 5 (referred to sometimes as by-pass orifice) in the piston into the region 11 in the upper portion of the chamber. Flow can also pass, i.e. exit, the second region 11 through a damping orifice 8, which with the flow thought the bore 5, can smooth pressure variation of P.

According to one example of the invention, within the bore of the piston is located a throttle plug 9, which can be provided as an insert, or alternatively, integral with the piston. This throttle plug may be in any form but is preferably in the form of an annular member with a plug orifice 12, so e.g. disc/washer shaped with a hole through the middle. Thus the by-pass includes such a throttle plug.

The throttle plug can be made/formed from a material which expands substantially with temperature and is preferably rubber or rubber type material.

Preferably the material has a thermal expansion coefficient of more than 50 x 10-6 m/m/K. More preferably the material has a thermal expansion coefficient of more than 100 x 10-6 m/m/K.

Thus the figure shows essentially rubber insert bonded inside a normal metal regulator piston and the rubber insert has itself an orifice through its center. Alternatively the piston and plug may be integrally formed.

As fluid changes temperature so does the components it is in contact with. As such the rubber or temperature expandable material will expand and contract with temperature thus dynamically altering the orifice size and the damping ratio across the piston.

The invention is also applicable to the damping orifice (port) 8 on the regulator. In other words the damping orifice may include a throttle plug formed e.g. as a rubber insert.

## Claims

1. A fluid pressure regulation device (1) including a housing defining a fluid chamber, and a piston (3) located within said chamber and dividing said chamber into first (10) and second (11) regions, said first region being generally enclosed and bounded by said housing and piston, and wherein said piston is adapted to move within said chamber as a result of pressure difference in the first and second regions, and including a first fluid flow path through said piston allowing flow of fluid between said first and second regions, said first flow path being formed as a bore (5) through said piston forming a by-pass orifice, and a damping orifice (8) located in said housing to provide a second flow path from said first region, wherein a throttle plug (9) is located within said first and/or second flow paths, **characterised in that** said throttle plug is formed of a material having a thermal expansion coefficient of more than 50 x 10⁻⁶ m/m/K.

2. A device as claimed in claims 1 wherein said throttle plug (9) is an annular, disc or washer shaped element.

3. A device as claimed in claims 1 to 2 wherein said throttle plug (9) includes an orifice (12).

4. A device as claimed in claim 1 to 3 wherein the periphery of the throttle plug (12) forms a seal with said bore (5) and/or damping orifice.

5. A device as claimed in any previous claim wherein said piston (3) is urged in one direction by spring means (6) .

6. A device as claimed in any preceding claim wherein said throttle plug is formed as an insert within said piston bore or damping orifice.

7. A device as claimed in any preceding claim wherein said throttle plug is formed integral with said piston.

8. A pressure regulation device as claimed in claims 1 to 7 where said throttle plug is formed of rubber or a rubber-like material.

9. A pressure regulation device as claimed in claim 1 to 8 wherein said throttle plug is formed of a material having a thermal expansion coefficient of more than 100 x 10⁻⁶ m/m/K.

## Patentansprüche

1. Eine Fluiddruckregelvorrichtung (1) mit einem Gehäuse, das eine Fluidkammer definiert, und einem Kolben (3), der sich in der Kammer befindet und die Kammer in einen ersten (10) und einen zweiten (11) Bereich unterteilt, wobei der erste Bereich im Allgemeinen von dem Gehäuse und dem Kolben umschlossen und begrenzt ist, und wobei der Kolben ausgebildet ist, sich innerhalb der Kammer zu bewegen als Ergebnis einer Druckdifferenz in dem ersten und dem zweiten Bereich, und mit einem ersten Fluidpfad durch den Kolben, der einen Fluidstrom zwischen dem ersten und dem zweiten Bereich ermöglicht, wobei der erste Fluidpfad als eine Bohrung (5) durch den Kolben ausgebildet ist, eine Bypass-Öffnung bildend, und einer Dämpfungsöffnung (8), die sich in dem Gehäuse befindet, um einen zweiten Fluidpfad von dem ersten Bereich vorzusehen, wobei sich ein Drosselpfropfen (9) in dem ersten und/oder dem zweiten Fluidpfad befindet, **dadurch gekennzeichnet, dass** der Drosselpfropfen aus einem Material gebildet ist, das einen Wärmeausdehnungskoeffizient von mehr als 50 x 10⁻⁶ m/m/K hat.

2. Eine Vorrichtung gemäß Anspruch 1, wobei der Drosselpfropfen (9) ein ringförmiges, platten- oder scheibenförmiges Element ist.

3. Eine Vorrichtung gemäß den Ansprüchen 1 bis 2, wobei der Drosselpfropfen (9) eine Öffnung (12) umfasst.

4. Eine Vorrichtung gemäß Anspruch 1 bis 3, wobei der Umfang des Drosselpfropfens (12) eine Dichtung mit der Bohrung (5) und/oder der Dämpfungsöffnung bildet.

5. Eine Vorrichtung gemäß einem vorhergehenden Anspruch, wobei der Kolben (3) durch Federmittel (6) in eine Richtung gedrückt wird.

6. Eine Vorrichtung gemäß einem vorhergehenden Anspruch, wobei der Drosselpfropfen als ein Einsatz in der Kolbenbohrung oder der Dämpfungsöffnung ausgebildet ist.

7. Eine Vorrichtung gemäß einem vorhergehenden Anspruch, wobei der Drosselpfropfen integral mit dem Kolben gebildet ist.

8. Druckregelvorrichtung gemäß den Ansprüchen 1 bis 7, wobei der Drosselpfropfen aus Gummi oder einem gummiartigen Material gebildet ist.

9. Druckregelvorrichtung gemäß Anspruch 1 bis 8, wobei der Drosselpfropfen aus einem Material gebildet ist, das einen Wärmeausdehnungskoeffizient von mehr als 100 x 10⁻⁶ m/m/K hat.

## Revendications

1. Dispositif de régulation de pression pour fluide (1) incluant un boîtier définissant une chambre à fluide, et un piston (3) situé à l'intérieur de ladite chambre et divisant ladite chambre en une première région (10) et en une seconde région (11), ladite première région étant généralement enfermée et bordée par ledit boîtier et ledit piston, et dans lequel ledit piston est adapté à se déplacer à l'intérieur de ladite chambre en résultat d'une différence de pression dans la première et dans la seconde région, et incluant un premier trajet d'écoulement de fluide à travers ledit piston permettant un écoulement de fluide entre ladite première et ladite seconde région, ledit premier trajet d'écoulement étant formé comme un perçage (5) à travers ledit piston en formant un orifice de by-pass, et un orifice d'amortissement (8) situé dans ledit boîtier pour assurer un second trajet d'écoulement depuis ladite première région, dans lequel un bouchon d'étranglement (9) est situé à l'intérieur dudit premier et/ou dudit second trajet d'écoulement,
**caractérisé en ce que**
ledit bouchon d'étranglement est formé d'un matériau ayant un coefficient d'expansion thermique supérieur à 50 x 10⁻⁶ m/m/K.

2. Dispositif selon la revendication 1, dans lequel ledit bouchon d'étranglement (9) est un élément annulaire en forme de disque ou de rondelle.

3. Dispositif selon l'une des revendications 1 et 2, dans lequel ledit bouchon d'étranglement (9) inclut un orifice (12).

4. Dispositif selon l'une des revendications 1 à 3, dans lequel la périphérie du bouchon d'étranglement (12) forme un joint avec ledit perçage (5) et/ou ledit orifice d'amortissement.

5. Dispositif selon l'une quelconque des revendications précédentes, dans lequel ledit piston (3) est forcé dans une direction par un moyen formant ressort (6).

6. Dispositif selon l'une quelconque des revendications précédentes, dans lequel ledit bouchon d'étranglement est formé comme un insert à l'intérieur dudit perçage du piston ou dudit orifice d'amortissement.

7. Dispositif selon l'une quelconque des revendications précédentes, dans lequel ledit bouchon d'étranglement est formé de manière intégrale avec ledit piston.

8. Dispositif de régulation de pression selon l'une des revendications 1 à 7, dans lequel ledit bouchon d'étranglement est formé en caoutchouc ou en matériau similaire au caoutchouc.

9. Dispositif de régulation de pression selon l'une des revendications 1 à 8, dans lequel ledit bouchon d'étranglement est formé d'un matériau ayant un coefficient d'expansion thermique supérieur à 100 x 10⁻⁶ m/m/K.
